# DEMANDE DE BREVET EUROPEEN

(11) **EP 2 309 428 A1**
(43) Date de publication de la demande: **13.04.2011**
(21) Numéro de dépôt: 10181212.1
(22) Date de dépôt: 28.09.2010
(51) Int. Cl.: G06K 19/077

(54) **Procédé de répartition d'étiquettes dotées d'une carte sans contact sur un ensemble de supports et dispositif de mise en oeuvre dudit procédé**

(30) Priorité: 07.10.2009 FR 0956972
(71) Demandeur: SAGEMCOM DOCUMENTS SAS, 92500 Rueil Malmaison (FR)
(72) Inventeur: Sabatier, Pierre, 92848, RUEIL MALMAISON CEDEX (FR)
(74) Mandataire: Lotaut, Yacine Diaw

(57) **Abrégé**

La présente invention a pour objet un dispositif d'incorporation apte à exécuter un procédé de répartition d'étiquettes dotées d'une carte (25) sans contact sur un ensemble (27) support. Le dispositif d'incorporation est intégré dans une machine de fabrique de papier ou dans un appareil de formation d'image, telle qu'une imprimante, une photocopieuse ou un scanner à défilement. Lors de l'exécution du procédé de répartition, les zones de dépôts sur les supports (14) 0de l'ensemble sont respectivement décalées successivement dans le temps selon un axe d'incorporation perpendiculaire à un axe de défilement du support. Le décalage est déterminé, selon un algorithme de répartition par distribution prédéfini, de sorte que l'étiquette d'un support précédent est recouverte au moins partiellement par l'étiquette d'un support suivant.

## Description

### Domaine de l'invention

La présente invention a pour objet un procédé de répartition d'étiquettes dotées d'une carte sans contact sur un ensemble support. Plus particulièrement, la présente invention a pour objet un procédé d'agencement d'un ensemble d'étiquettes dotées de carte sans contact sur un ensemble de supports. Le domaine de l'invention est celui de la gestion de l'archivage de documents munis de telles étiquettes. La présente invention concerne également un dispositif mettant en oeuvre un tel procédé de répartition.

### Etat de la technique

Aujourd'hui, la conservation des documents est essentielle au sein d'une entreprise, notamment dans le cadre des contrôles administratifs. Chaque jour, un nombre important de documents en format papier est produit, lesquels doivent être référencés et archivés. Ces documents sont placés, en général, sur des étagères ou des bureaux et chaque employé peut y accéder. Ce type d'archivage présente des inconvénients. En effet, la recherche d'un document est un travail fastidieux, surtout dans la mesure où ces documents passent souvent d'une personne à l'autre. Dans le pire des cas, la localisation d'un seul document peut prendre plusieurs jours.

Pour résoudre ces inconvénients, les documents papiers sont fréquemment numérisés, de sorte qu'ils peuvent être archivés sous forme électronique. Toutefois, cet archivage électronique ne dispense pas d'un archivage physique des documents.

Aujourd'hui, pour assurer un suivi fiable et rapide des dossiers, il est connu de munir les documents papier à archiver ou des boîtes d'archives de micropuces électroniques appelées étiquettes ou « tags RFID » (pour Radio Frequency Identification Device). Il suffit ensuite de faire passer un lecteur devant les dossiers ou boîtes étiquetés pour que le système les identifie instantanément sans avoir à les manipuler. Ainsi, le rendement pour la gestion de documents en grande quantité et la sécurité des documents importants peuvent être améliorés tout en facilitant notamment l'inventaire des documents.

Toutefois, ce système d'archivage présente des inconvénients. En effet, les étiquettes RFID collées sur chaque boîte d'archive ou chaque dossier sont effectuées manuellement. La nécessité d'une intervention humaine en début du processus de gestion des documents représente un coût de main d'oeuvre relativement important. Ce coût est d'autant plus considérable, lorsque la gestion et l'archivage concernent plusieurs centaines de milliers de documents. En outre, le risque d'erreur est très élevé du fait de l'intervention humaine.

Ce type de système d'archivage présente en outre des inconvénients, lorsque plusieurs étiquettes se superposent. En effet, les étiquettes transmettent difficilement les données au lecteur en cas d'interposition d'une étiquette entre une autre étiquette et le lecteur. Les communications sont brouillées par l'activité simultanée de ces étiquettes. Le masquage des étiquettes les unes par les autres par rapport au lecteur produit un problème d'inefficacité de la gestion de l'archivage par la technologie RFID. Par conséquent, en parcourant les étiquettes RFID à la recherche d'un document, l'utilisateur risque de ne pas le trouver en raison d'un défaut de détection de l'étiquette par le lecteur.

Ainsi actuellement, se fait réellement sentir le besoin de simplifier et d'améliorer l'efficacité des systèmes de gestion des documents physiques via les étiquettes RFID.

Le document WO 01/03058 propose une solution destinée à répondre à ce besoin. Cette solution consiste en un procédé de répartition d'étiquettes doté d'une carte sans contact. Dans le document WO 01/03058, la répartition est faite à l'aide d'algorithmes aléatoires et de sorte à supprimer tout chevauchement des étiquettes les unes par rapport aux autres.

### Exposé de l'invention

L'invention a justement pour but de répondre à ce besoin en proposant une alternative à la solution proposée par le document WO 01/03058. Pour cela, l'invention propose un dispositif d'incorporation d'étiquettes dans des documents physiques, lequel diminue la durée et la main d'oeuvre exigées pour cette incorporation. L'invention propose également un procédé de distribution des étiquettes sur un ensemble de documents, lors de leur incorporation. Ce procédé est configuré de sorte à diminuer de manière relativement importante la superposition des étiquettes, lors de l'archivage des documents correspondants. Avec l'invention, les étiquettes respectives de chaque document sont visibles individuellement au lecteur.

Ce procédé permet ainsi une gestion d'archivage des étiquettes dans les documents plus avantageuse et appréciable pour les entreprises.

Par rapport au document WO 01/03058, le mode de répartition des étiquettes est effectué de manière prédéfinie et non aléatoire. En outre dans WO 01/03058, la répartition est faite de sorte à supprimer les chevauchements des étiquettes les unes par rapport aux autres. Alors que dans l'invention, on cherche au contraire une méthode de répartition permettant un chevauchement partiel des étiquettes les unes par rapport aux autres.

L'invention a donc pour objet un procédé de répartition d'étiquettes dotées d'une carte sans contact sur un ensemble de supports, dans lequel
- on initialise une zone de dépôt d'étiquettes dans un premier des supports,
- on décale successivement dans le temps, la zone de dépôt d'un support à un suivant, le décalage étant selon un axe d'incorporation perpendiculaire à un axe de défilement du support,
- le décalage étant déterminé, selon un algorithme de répartition par distribution prédéfini, de sorte que l'étiquette incorporée sur un support suivant recouvre une surface de chevauchement prédéfinie de l'étiquette du support précédent, la surface de chevauchement étant inférieure à une surface d'une étiquette.

Avantageusement, l'invention est également **caractérisée en ce que** l'algorithme de répartition est défini selon notamment une matrice de tramage à dispersion.

Avantageusement, l'invention est également **caractérisée en ce que** l'algorithme de répartition est défini selon un algorithme pseudo aléatoire de type séquences de HALTON ou de SOBOL.

Avantageusement, l'invention est également **caractérisée en ce que** l'algorithme de répartition est défini selon un pas de décalage séquentiel sur l'axe d'incorporation, ce pas étant déterminé en fonction de la surface de chevauchement.

Avantageusement, l'invention est également **caractérisée en ce que** le décalage est en outre déterminé selon une configuration de répartition, ladite configuration correspondant à une disposition géométrique des étiquettes sur l'ensemble de supports superposées.

Avantageusement, l'invention est également **caractérisée en ce que** deux étiquettes de deux supports, dans l'ensemble de supports, se recouvrent totalement, lorsque la distance séparant ces deux étiquettes est supérieure ou égale à une épaisseur prédéfinie de supports, l'épaisseur étant déterminée de sorte que les deux étiquettes sont visibles individuellement à un lecteur.

Avantageusement, l'invention est également **caractérisée en ce que** l'épaisseur est égale à environ deux centimètres.

L'invention a également pour objet un procédé de fabrication de papier comportant une étape d'incorporation, avant une étape de pressage, dans laquelle :
- on place sur une zone de dépôt d'une feuille humide une étiquette dotée d'une carte sans contact de sorte à incorporer l'étiquette dans la masse de la feuille, lors du pressage de la feuille entre deux cylindres tournant dans des sens opposés,
- la zone de dépôt étant déterminée selon le procédé de répartition d'étiquettes de l'invention.

L'invention a également pour objet un dispositif de fabrication de papier **caractérisé en ce qu**'il comporte:
- un dispositif d'incorporation d'étiquette dotée d'une carte sans contact placé avant le pressoir,
- des moyens pour exécuter le procédé de fabrication de papier de l'invention.

L'invention a également pour objet un procédé de formation d'image à partir d'un support dans lequel :
- le support est entraîné par défilement devant un dispositif d'incorporation d'étiquettes,
- on dépose par collage, sur une zone de dépôt du support une étiquette dotée d'une carte sans contact,
- la zone de dépôt étant déterminée selon le procédé de répartition d'étiquettes de l'invention.

Avantageusement, l'invention est également **caractérisée en ce que**, lors de l'incorporation de l'étiquette sur le support, déjà numérisé ou en cours de numérisation, on associe dans une mémoire de données d'un serveur de gestion des données d'identifications de l'étiquette, transmises par un lecteur d'étiquette, à un document électronique issue de la numérisation du support.

L'invention a également pour objet un appareil de formation d'image **caractérisé en ce qu**'il comporte :
- un dispositif d'incorporation d'une étiquette dotée d'une carte sans contact dans un support,
- des moyens pour exécuter le procédé de formation d'image de l'invention.

Avantageusement, l'invention est également **caractérisée en ce que** l'appareil de formation d'image est une photocopieuse, une imprimante un scanner à défilement ou une combinaison des trois.

Avantageusement, l'invention est également **caractérisée en ce que** l'appareil de formation d'image est un scanner couplé avec un lecteur d'étiquettes, ledit lecteur et ledit appareil étant connecté à un serveur de gestion.

### Brève description des dessins

L'invention sera mieux comprise à la lecture de la description qui suit et à l'examen des figures qui l'accompagnent. Celles-ci sont présentées à titre indicatif et nullement limitatif de l'invention.
La figure 1 montre une représentation schématique d'un dispositif de fabrication de papier, dans lequel est incorporée une étiquette RFID selon le procédé de l'invention.
Les figures 2 et 5 montrent un appareil de formation d'image muni des moyens perfectionnés de l'invention.
La figure 3 montre une illustration de moyens mettant en oeuvre le procédé de l'invention.
La figure 4 montre un exemple de distribution d'étiquettes sur un ensemble de supports.

### Description détaillée de modes de réalisation de l'invention

Dans la description, le terme support indique soit une feuille de papier soit un document composé d'un ensemble de feuilles reliées entre elles par un moyen mécanique tel qu'une agrafe.

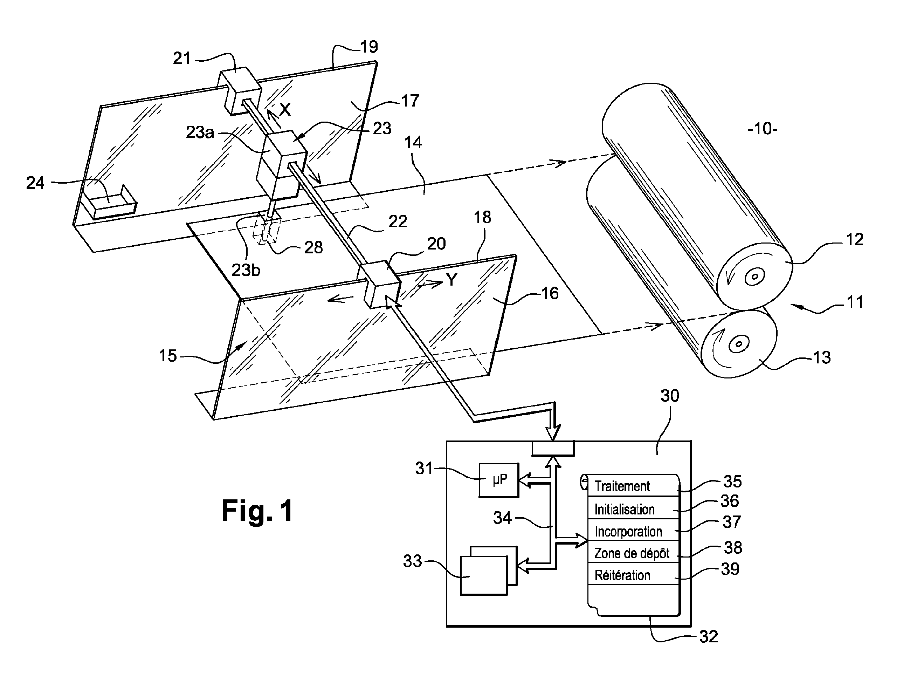

La figure 1 montre un exemple de dispositif 10 de fabrication de papier muni des moyens perfectionnés de l'invention. Dans l'exemple de la figure 1, le support sur lequel est incorporée une étiquette est une feuille de papier. Un ensemble de supports correspond à des feuilles de papier superposées. Dans un mode de réalisation préféré de l'invention, les supports ont les mêmes dimensions.

Dans ce dispositif 10, la pâte à papier brute, constituée essentiellement de fibres de cellulose, est mise sous forme d'une suspension aqueuse diluée qui est amenée dans une caisse de tête (non représentée) d'où elle est distribuée sur une toile filtrante sur laquelle se forme une feuille 14 de papier. Dans un procédé habituel de fabrication du papier, une bande humide de feuille 14 de papier qui quitte les cylindres de formation d'une feuille passe directement à travers un pressoir 11, puis à une sécherie (non représentée) pour ensuite être calandrée et bouquinée. Dans l'exemple de la figure 1, le pressoir 11 est formé de deux cylindres 12 et 13 tournant dans des sens opposés.

Dans la mise en oeuvre de l'invention, une phase d'incorporation d'étiquettes 25 RFID dans le papier est faite avant le passage au pressoir 11. Etant donné que la feuille 14 de papier comporte une proportion relativement grande d'humidité, le passage de la feuille 14 dans le pressoir 11 permet de lier fermement l'étiquette 25 aux fibres humides de la feuille 14. Ainsi, lors du pressage de la feuille 14 entre les deux cylindres 12 et 13, l'étiquette 25 s'insère dans la masse de la feuille 14 humide. Le pressoir 11 ayant pour but de réduire l'épaisseur de la feuille, il fournit en sortie une feuille 14 de papier présentant une structure ayant une épaisseur quasi uniforme.

L'étiquette 25 incorporée dans la feuille 14 comporte une carte à puce sans contact. La carte comprend une antenne et/ou une puce électronique intégrées dans la carte et appliquées sur un film support. La fabrication de ces films support intégrant des antennes et des puces est connue de l'état de l'art. L'antenne peut être constituée par un fil bobiné appliqué directement sur la feuille ou par réalisation d'une impression, notamment une impression sérigraphique. Le film support est un film en plastique ou en papier. Le film support peut être transparent. L'ensemble composé du support plastique ou papier et de l'antenne est appelé étiquette dans la description.

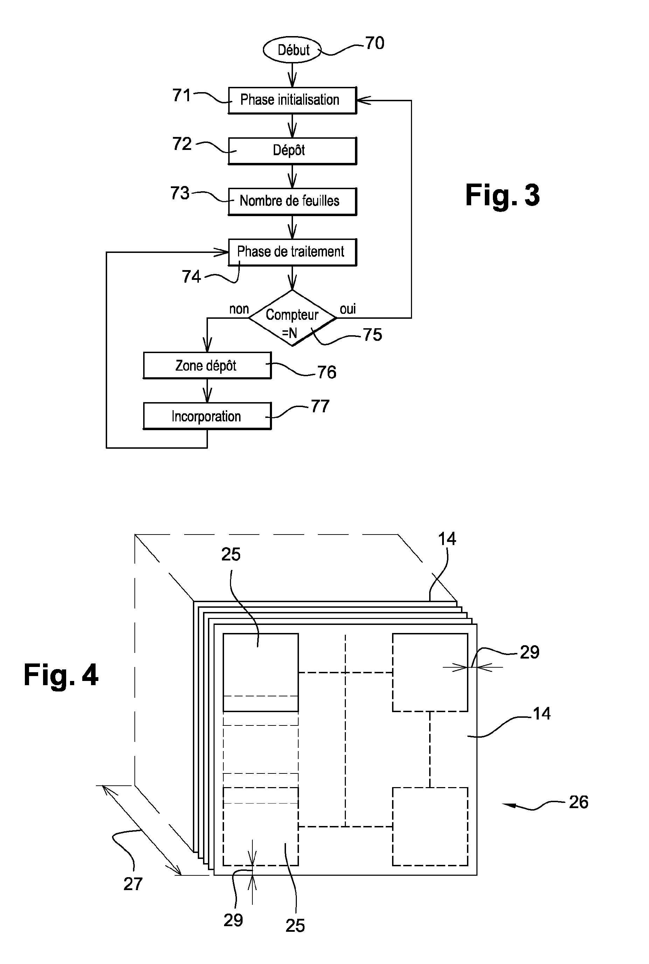

Ces cartes sont appelées cartes sans contact car leur utilisation n'implique aucun contact physique avec des lecteurs. Les messages d'information entre la carte sans contact et le dispositif de lecture associé s'effectuent par couplage électronique à distance, entre l'antenne logée dans la carte sans contact et une deuxième antenne située dans le lecteur. L'étiquette 25 telle que représentée à la figure 4 est rectangulaire. Elle peut prendre toutes autres formes selon les modes de réalisation.

Lors de l'incorporation d'une étiquette 25, la feuille 14 humide passe devant un dispositif 15 d'incorporation d'étiquettes RFID, avant d'arriver au pressoir 11.

Le dispositif 15 de l'invention comporte deux châssis 16 et 17 montés en regard l'un de l'autre. Sur chaque châssis 16 et 17 est monté respectivement un support 18 et 19 de roulement. Le support 18 ou 19 de roulements peut être une glissière ou un rail. Le dispositif 15 comporte deux moyens 20 et 21 de roulements montés respectivement en translation sur les supports 18 et 19 de roulements. Les moyens 20 et 21 de roulements peuvent être formés de galets commandés par une unité motrice. Aux deux moyens 20 et 21 de roulements sont fixés une tige 22 rectangulaire. Sur cette tige 22 coulisse un robot 23 actionneur. Le robot actionneur 23 comporte un bras 23a comportant au voisinage de son extrémité libre un mécanisme 23b de préhension d'une étiquette 25. Le mécanisme 23b de préhension est de préférence de longueur ajustable, par exemple télescopique, animé d'un mouvement de monte et descente le long du bras 23a.

On définit deux axes X et Y perpendiculaires. Le défilement de la feuille de papier lors du processus de fabrication se fait sur l'axe Y vertical. De ce fait, dans l'exemple de la figure 1, les moyens de roulements 20 et 21 sont déplacés sur l'axe Y de défilement de la feuille et le bras actionneur 23 est déplacé sur la tige 22 sur l'axe des X appelé ci-après axe d'incorporation.

De manière générale dans l'invention, l'incorporation des étiquettes sur le support est faite suivant un axe perpendiculaire à l'axe de défilement du support.

Le dispositif 15 d'incorporation comporte un bac 24 d'étiquettes dans lequel le mécanisme 23b de préhension prélève une étiquette à incorporer sur la feuille 14. Le bac 24 est placé, dans l'exemple de la figure 1, sur un des châssis15 ou 16. Dans une variante, un ou plusieurs bacs 24 peuvent être placés sur le dispositif 15 à des endroits déterminés, de sorte à faciliter les actions du mécanisme 23b de préhension. Le mécanisme 23b de préhension peut être un mécanisme d'une main artificielle ou d'un crochet qui se ferme sous le contrôle d'une force mécanique exercé par le robot 23. L'ouverture se fait et se maintient par un mécanisme élastique ou en ressort commandé par le robot 23.

Le déplacement des moyens de roulements 20 et 21 et du robot actionneur 23 et ses actions sont commandés par une unité de traitement 30.

L'unité de traitement 30 comporte notamment un microprocesseur 31, une mémoire 32 de programme, une mémoire 33 de données. Les éléments 31 à 32 sont connectés par un bus 34 de communication.

Dans la description, on prête des actions à des appareils ou à des programmes, cela signifie que ces actions sont exécutées par un microprocesseur de cet appareil ou de l'appareil comportant le programme, le microprocesseur étant alors commandé par des codes instructions enregistrés dans une mémoire de l'appareil. Ces codes instructions permettent de mettre en oeuvre les moyens de l'appareil et donc de réaliser l'action entreprise.

La mémoire 32 de programme est divisée en plusieurs zones, chaque zone correspondant à une fonction ou à un mode de fonctionnement du dispositif 15 d'incorporation. De même, lorsque l'on prête une action à un programme ou à un appareil, cette action correspond à la mise en oeuvre par un microprocesseur, connecté à une mémoire dans laquelle est enregistré le programme, de tout ou partie des codes instructions formant ledit programme. Seules les zones de la mémoire 32 intéressant le plus directement l'invention sont représentées.

Le dispositif 15 d'incorporation comporte une interface graphique homme machine (non représenté). Cette interface comporte divers intitulés descriptifs dont la disposition permet de guider l'utilisateur dans la saisie d'informations de programmation d'une configuration de répartition des étiquettes 25 sur les feuilles 14 à fabriquer et d'un mode de répartition pour obtenir cette configuration. Cette interface permet à l'utilisateur de configurer et de commander des actions du bras actionneur selon la saisie.

La configuration de répartition correspond à une disposition géométrique des étiquettes 25 sur un ensemble 26 de supports, selon une épaisseur 27 de l'ensemble 26 prédéfinie. La figure 4 montre un exemple de configuration de répartition.

Une zone 35 comporte des codes instructions pour traiter les informations saisies sur l'interface graphique. Cette zone 35 permet d'activer le bras actionneur 23 en conséquence d'une validation par l'utilisateur de cette saisie.

Une zone 36 comporte des codes instructions pour transmettre un ordre de commande d'initialisation au robot actionneur 23. Dès réception de cet ordre de commande d'initialisation, le robot actionneur 23 est déplacé sur la tige 22 à une position initiale, correspondant à une zone 28 de dépôt initiale d'une étiquette 25 sur la feuille 14.

Une zone 37 comporte des codes instructions pour transmettre un ordre d'incorporation au robot actionneur 23. Dès réception de cet ordre, le mécanisme 23b de préhension est déplacé longitudinalement pour déposer l'étiquette 25 prélevée sur la zone 28 de dépôt.

Une zone 38 comporte des codes instructions pour déterminer une zone 28 de dépôt suivante sur une feuille 14 suivante selon le mode de répartition saisi en fonction de la configuration de répartition. Pour ce faire, l'unité de traitement convertit la feuille 14 suivante en un ensemble de lignes successives constituées de points successifs (pixels). Puis, il applique à la feuille 14 convertie le mode de répartition saisi. Ce mode de répartition est de préférence un algorithme pseudo-aléatoire. Dans l'invention, le mode de répartition est défini de sorte que lorsqu'on superpose deux feuilles successives alors les étiquettes se recouvrent partiellement.

Les caractéristiques du mode de répartition sont déterminées de sorte:
- à fournir un décalage temporel entre deux étiquettes 25 de deux feuilles 14 successives, et
- à ce que l'étiquette 25 incorporée sur une feuille 14 suivante couvre une surface de chevauchement prédéfinie de l'étiquette 25 d'une feuille précédente. Afin d'éviter les problèmes liés à une superposition d'étiquettes dans une configuration de répartition d'un ensemble de supports, la surface de chevauchement est inférieure à la surface d'une étiquette. Cette surface de chevauchement est de préférence de l'ordre de 10 à 20% de la surface d'une étiquette.

Le mode de répartition peut être obtenu selon des matrices établies à partir de la théorie mathématique des suites à discrépance faible. Ces matrices permettent de fournir une répartition aléatoire et uniforme des étiquettes 25 sur l'ensemble 26 des feuilles 14.

Dans un exemple ces matrices peuvent être des matrices telles que celles utilisées sur les algorithmes de tramage. Par exemple des matrices de Dither à ordre dispersées, telles que les matrices de Bayer par exemple peuvent être implémentées. Les matrices comportent des lignes et des colonnes dont les intersections correspondent à des positions possibles des étiquettes ou tags RFID, en tenant compte de la surface de chevauchement. Le fonctionnement de ces matrices est assez connu et traité dans l'état de la technique pour ne pas être décrit en détail dans la description. Les algorithmes de tramages basés sur de tels procédés permettent de disperser les points d'encres et sont donc des bons candidats à des procédés de dispersion des tags RFID.

Egalement des algorithmes basés sur des séquences quasi aléatoires telles que les séquences de HALTON ou de SOBOL, pourraient être également utilisées.

Le mode de répartition peut être également obtenu selon un déplacement séquentiel du robot 23, d'un pas de décalage d'incorporation prédéfini sur l'axe des X. Ce pas de décalage est déterminé selon la surface de chevauchement prédéfinie.

Dès que la zone de dépôt suivante sur la feuille suivante est déterminée, l'unité de traitement, via les codes instructions de la zone 38, transmet au robot 23 un ordre de déplacement puis d'incorporation.

Une zone 39 comporte des codes instructions pour déterminer le nombre de feuilles 14, correspondant à l'épaisseur 27, nécessaire pour obtenir une configuration de répartition dans l'ensemble 26 de supports. Les codes instructions de la zone 39 réitèrent les codes instructions des zones 36, 37 et 38 sur une nouvelle configuration de répartition, lorsque le nombre de feuilles 14 de la configuration de répartition précédente est atteint.

Le dispositif 10 de fabrication de papier fournit en sortie des rames de feuilles souples, en papier imprimable, dans lesquelles est incorporée une étiquette souple, incorporant au moins un micro circuit. Les étiquettes sont disposées dans chaque rame, de sorte à ne pas se masquer les unes aux autres par rapport au lecteur.

Actuellement, la vitesse de défilement de la feuille 14 de papier en bout des systèmes de fabrication de papier est relativement élevée. Elle peut être de l'ordre de 1200 m/mn. Dans l'invention, la vitesse d'exécution des actions relatives à l'incorporation des étiquettes 25 peut être proportionnelle à cette vitesse de défilement. Dans certains cas, pour pallier à la vitesse de défilement élevée, il sera nécessaire par exemple :
- de mettre en place une série de dispositifs 15 d'incorporation commandés par l'unité de traitement 30,
- de mettre en place une série de robots 23 sur la tige 22 commandés par l'unité de traitement 30, ou
- de diminuer la vitesse de défilement pour la fabrication de ce type de papier.

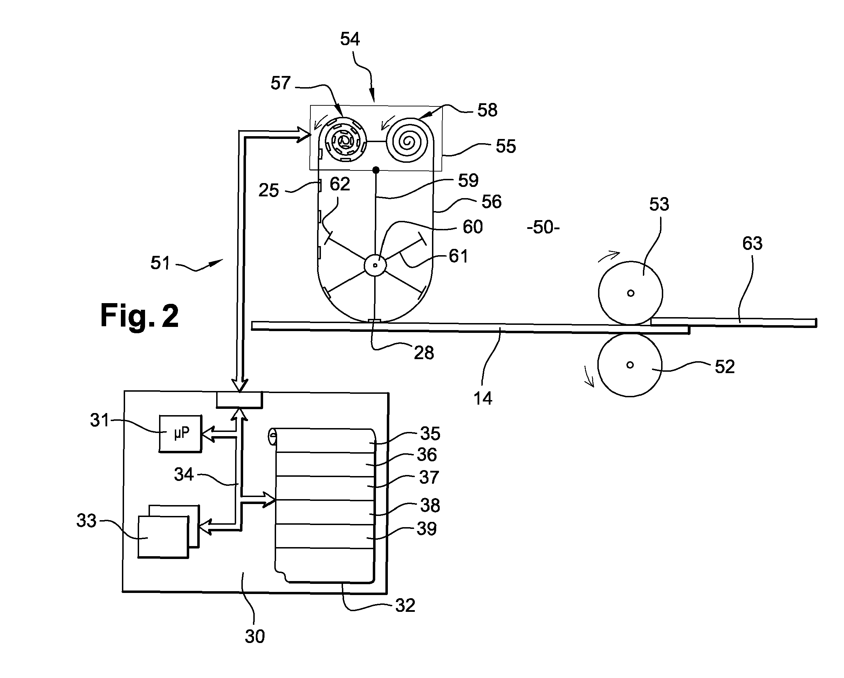

La figure 2 montre un autre mode de réalisation de l'invention. La figure 2 montre un appareil 50 de formation d'image muni d'un dispositif 51 d'incorporation d'étiquettes selon le procédé de répartition de l'invention. Dans l'exemple de la figure 2, l'ensemble support sur lequel sont incorporées des étiquettes est un ensemble de feuilles de papier.

L'appareil 51 de formation d'image peut être une imprimante, une photocopieuse ou un scanner à défilement. Il peut également être une combinaison des trois.

Le dispositif 51 d'incorporation peut être placé en début du processus de formation d'image, ou en fin de processus. Il comporte un mécanisme d'entraînement comprenant un rouleau 52 introducteur et un rouleur 53 frein disposé en regard du rouleau 52 introducteur. Le rouleau 52 introducteur, lorsqu'il est entraîné en rotation, est apte à prélever une feuille 14 et à l'introduire dans le mécanisme d'entraînement pour amorcer le dépôt de l'étiquette 25 sur la feuille 14 par un dévidoir 54 d'étiquettes 25. La feuille est introduite entre le rouleau 52 introducteur et le rouleau 53 frein.

Le rouleau 53 frein est monté en rotation et couplé à un dispositif de freinage (non représenté) qui s'oppose à la rotation du rouleau 52 introducteur. Le rouleau 53 frein permet d'une part de plaquer la feuille 14 contre le rouleau 52 introducteur et d'autre part de retenir une feuille suivante pour éviter de prélever plusieurs feuilles à la fois. Sur la feuille 14 sortant du rouleau de frein et d'introduction, est déposée l'étiquette 25 par le dévidoir 54.

En général, le défilement de la feuille 14 de papier dans un appareil 50 de formation d'image se fait sur l'axe des Y. De ce fait, dans l'exemple de la figure 2, le dévidoir 54 est déplacé sur l'axe X de défilement de la feuille.

Le dévidoir 54 comporte un logement 55 dans lequel un ruban 56, porte-étiquettes enroulé autour d'un premier tambour 57 débiteur passe par un second tambour 58 récepteur. Le second tambour 58 permet d'enrouler le ruban 56 porte-étiquettes venant du premier tambour 57. Le mouvement en rotation des tambours 57 et 58 est contrôlé par l'unité de traitement 30. Le ruban 56 est de préférence adhésif. Les étiquettes 25 portées par le ruban 56 sont espacées par un intervalle prédéfini. Cet intervalle est déterminé en fonction de la vitesse de défilement de la feuille de sorte à libérer assez de temps pour calculer une nouvelle zone de dépôt et pour commander le déplacement des éléments du dévidoir 54 à cette nouvelle zone de dépôt.

Le dévidoir 54 comporte un arbre 59 sur lequel est monté en rotation un mécanisme 60 d'entraînement. Ce mécanisme 60 d'entraînement est muni de bras 61 radiaux comportant un mécanisme de préhension 62. Le nombre des bras 61 radiaux peut être déterminé en fonction de la vitesse de défilement de la feuille 14. Dans l'exemple de la figure 2, l'arbre 59 est installé dans le dévidoir 54 de sorte que le mécanisme 62 de préhension des bras radiaux puisse prélever une étiquette sur le ruban 56 et le déposer sur la feuille 14.

Le déplacement du dévidoir 54, les mouvements des tambours 57 et 58 ainsi que celui de l'arbre 59 sont commandés par des unités motrices (non représentées) commandées à leur tour par l'unité de traitement 30.

Le dispositif 51 d'incorporation comporte, comme le dispositif 15 de la figure 1, une interface graphique homme machine pour saisir une configuration de répartition des étiquettes 25 sur les feuilles 14 et un mode de répartition pour obtenir cette configuration.

Dans l'exemple de la figure 2, les codes instructions de la zone 35 activent le fonctionnement des différents éléments du dévidoir 54, en conséquence d'une validation par l'utilisateur de la saisie de la configuration et du mode de répartition.

Les codes instructions de la zone 36 transmettent un ordre de commande d'initialisation au dévidoir 54. Dès réception de cet ordre de commande d'initialisation, le premier tambour 57 déroule le ruban, l'arbre 59 entraîne le mécanisme 60 d'entraînement des bras 61 radiaux et le dévidoir 54 est déplacé à une position initiale correspondant à une zone 28 de dépôt initiale d'une étiquette 25 sur la feuille 14.

Dans l'exemple de la figure 2, l'étiquette 25 est prélevée sur le ruban et déposée sur la feuille 14 au cours de la rotation des bras radiaux.

Les codes instructions de la zone 38 déterminent la zone 28 de dépôt suivante sur une feuille 63 suivante selon le mode de répartition saisi en fonction de la configuration de répartition. Dès que la zone de dépôt suivante sur la feuille suivante est déterminée, l'unité de traitement via les codes instructions de la zone 38 transmettent un nouvel ordre de commande de déplacement au dévidoir 54.

Etant entendu que le tag RFID peut être déposé de façon idéale sur une seule page d'un ensemble de pages constituant un document homogène. Par exemple un document de n pages scannés et considéré comme étant le même document pourra également recevoir un seul tag sur une seule et même page.

Les codes instructions de la zone 39 réitèrent les codes instructions des zones 36, 37 et 38 pour une nouvelle configuration, lorsque le nombre de feuilles 14 pour la configuration de répartition précédent est atteint.

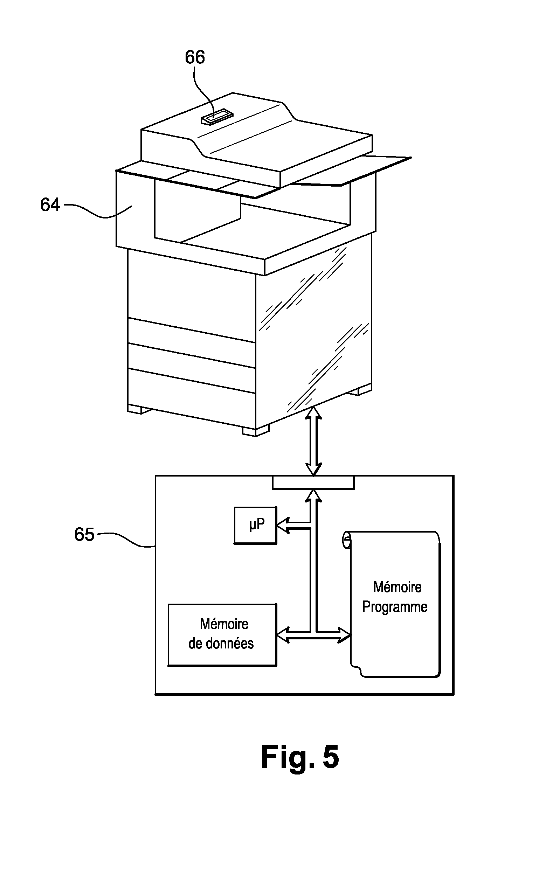

Dans un mode de réalisation, illustré par la figure 5, l'appareil 50 de formation d'images est un scanner 64 de défilement connecté à un serveur 65 de gestion via par exemple une connexion Ethernet ou un réseau de télécommunication tel qu'Internet. Le scanner 64 numérise le support sous forme de document électronique et le transmet au serveur de gestion en vue d'un archivage électronique. Le scanner 64 est couplé avec un lecteur 66 d'identification par radiofréquence.

Lors de l'incorporation des étiquettes 28 sur le support, déjà numérisé ou en cours de numérisation, le scanner 64 active le lecteur. Le lecteur 66 émet des signaux destinés à obtenir les informations contenues par une étiquette d'identification par radiofréquence située dans son champ de lecture. Le lecteur 66 transmet ensuite lesdites informations au serveur 65 de gestion. Le serveur 65 associe ensuite dans sa mémoire de données, les informations contenues dans l'étiquette 28 au document électronique fournit par la numérisation du support correspondant.

Dans une variante, le dispositif d'incorporation de la figure 1 peut être celui décrit à la figure 2 et vice-versa.

La figure 3 montre une illustration de moyens mettant en oeuvre le procédé de l'invention. La figure 3 montre une étape 70 préliminaire dans laquelle le dispositif d'incorporation est activé selon les données saisies sur l'interface graphique. A une étape 71, l'unité de traitement lance une phase d'initialisation en déterminant une zone 28 de dépôt initiale d'une étiquette 25 sur une feuille 14 considérée comme la première traitée. Cette zone est déterminée d'une part selon la configuration et le mode de répartition saisis et d'autre part selon des paramètres d'agencement préalablement définis. Ces paramètres peuvent être entre autres que les étiquettes sont déposées à, par exemple, environ deux centimètres de la bordure de la feuille pour éviter des zones 29 d'agrafage, voir figure 4.

A une étape 72, l'unité de traitement commande l'assemblage de l'étiquette 25 sur la première feuille 14 par incorporation selon la figure 1 ou par apposition selon la figure 2.

A une étape 73, l'unité de traitement calcule le nombre de feuilles nécessaires pour une configuration de répartition selon l'épaisseur 27 prédéfinie. A une étape 74, l'unité de traitement lance une phase de traitement en déclenchant un compteur de feuilles. L'issue de la phase de traitement est obtenue lorsque le nombre inscrit dans le compteur est égal au nombre de feuilles d'une configuration de répartition. A cette issue, à une étape 75, l'unité de traitement lance une nouvelle phase d'initialisation de l'étape 71 pour une nouvelle configuration de répartition. Les étapes suivantes à la phase d'initialisation sont réitérées pour cette nouvelle configuration.

Lorsque le compteur est inférieur au nombre de feuilles, l'unité de traitement détermine, à une étape 76, une zone de dépôt suivante sur la feuille suivante. Cette zone de dépôt est déterminée selon la configuration et le mode de répartition saisis.

A une étape 77, l'unité de traitement commande l'assemblage de l'étiquette 25 sur la feuille suivante par incorporation selon la figure 1 ou par apposition selon la figure 2.

Les étapes de détermination de zone de dépôt suivante, à l'étape 76, et d'incorporation d'étiquettes sur la zone suivante, à l'étape 77, sont réitérées autant de fois que la configuration de répartition n'est pas terminée. Autrement dit, autant de fois que le nombre inscrit sur le compteur n'est pas égal au nombre de feuilles déterminé à l'étape 73.

La figure 4 montre un exemple d'une configuration de répartition d'étiquettes 25 sur un ensemble de supports. Il est apparu, lors de la réalisation de l'invention, que pour une épaisseur 27 d'une configuration de répartition égale à environ deux centimètres, les étiquettes appartenant chacune à une configuration distincte et se trouvant dans le même alignement restent visibles pour un lecteur. Une épaisseur 27 d'environ deux centimètres équivaut à une configuration de répartition de l'ensemble 26 formées d'environ 150 feuilles 14 pour une épaisseur de feuille d'environ 0.13 millimètre.

Ainsi dans l'invention, la surface de chevauchement de deux étiquettes ne peut être égale à la surface d'une étiquette que lorsque la distance séparant ces deux étiquettes est supérieure ou égale à l'épaisseur 27. Autrement dit, deux étiquettes de deux feuilles ne peuvent être superposées que lorsque chacune des feuilles appartient à une configuration de répartition distincte.

Dans l'exemple de la figure 4, la configuration de répartition présente un alignement parallèle des étiquettes 25. Dans une varainte, cet alignement peut être oblique.

L'invention ne se limite pas aux modes de réalisation représentés sur les figures. En particulier, les dispositifs d'incorporation d'étiquettes décrits peuvent être remplacés par tout autre dispositif de l'état de la technique comportant des moyens d'incorporation d'une étiquette sur une feuille selon le procédé de l'invention.

Ainsi, grâce à l'invention, la gestion de l'archivage de documents est facilitée par la diminution de l'interposition d'étiquettes entre le lecteur et les étiquettes. L'invention permet ainsi de supprimer le masquage des étiquettes. En outre, la simplicité des pièces constitutives du dispositif d'incorporation est telle que ce dernier a un coût de fabrication relativement réduit.

## Revendications

1. Procédé de répartition d'étiquettes (25) dotées d'une carte sans contact sur un ensemble (26) de supports (14,63) dans lequel
- on initialise (71) une zone de dépôt (28) d'étiquettes dans un premier des supports,
- on décale successivement dans le temps, la zone de dépôt d'un support à un suivant, le décalage étant selon un axe (X) d'incorporation perpendiculaire à un axe (Y) de défilement du support,
- le décalage étant déterminé, selon un algorithme de répartition par distribution prédéfini, de sorte que l'étiquette incorporée sur un support suivant recouvre une surface de chevauchement prédéfinie de l'étiquette du support précédent, la surface de chevauchement étant inférieure à une surface d'une étiquette.

2. Procédé selon la revendication 1, **caractérisé en ce que** l'algorithme de répartition est défini selon notamment une matrice de tramage à dispersion.

3. Procédé selon la revendication 1, **caractérisé en ce que** l'algorithme de répartition est défini selon un algorithme pseudo aléatoire de type séquences de HALTON ou de SOBOL.

4. Procédé selon la revendication 1, **caractérisé en ce que** l'algorithme de répartition est défini selon un pas de décalage séquentiel sur l'axe d'incorporation, ce pas étant déterminé en fonction de la surface de chevauchement.

5. Procédé selon l'une des revendications précédentes, **caractérisé en ce que** le décalage est en outre déterminé selon une configuration de répartition, ladite configuration correspondant à une disposition géométrique des étiquettes sur l'ensemble de supports superposées.

6. Procédé selon l'une des revendications précédentes, **caractérisé en ce que** deux étiquettes de deux supports, dans l'ensemble de supports, se recouvrent totalement, lorsque la distance séparant ces deux étiquettes est supérieure ou égale à une épaisseur (27) prédéfinie de supports, l'épaisseur étant déterminée de sorte que les deux étiquettes sont visibles individuellement à un lecteur (66).

7. Procédé selon la revendication 6, **caractérisé en ce que** l'épaisseur est égale à environ deux centimètres.

8. Procédé de fabrication de papier comportant une étape d'incorporation, avant une étape de pressage (11) , dans laquelle :
- on place sur une zone (28) de dépôt d'une feuille (14) humide une étiquette (25) dotée d'une carte sans contact de sorte à incorporer l'étiquette dans la masse de la feuille, lors du pressage de la feuille entre deux cylindres (12, 13) tournant dans des sens opposés,
- la zone de dépôt étant déterminée selon l'une des revendications précédentes.

9. Dispositif de fabrication de papier **caractérisé en ce qu'**il comporte:
- un dispositif (15) d'incorporation d'étiquette dotée d'une carte sans contact placé avant le pressoir,
- des moyens (30) pour exécuter le procédé de fabrication selon la revendication 8.

10. Procédé de formation d'image à partir d'un support dans lequel:
- le support est entraîné par défilement devant un dispositif (54) d'incorporation d'étiquettes,
- on dépose par collage, sur une zone (28) de dépôt du support une étiquette (25) dotée d'une carte sans contact,
- la zone de dépôt étant déterminée selon l'une des revendications précédentes 1 à 7.

11. Procédé de formation d'image selon la revendication 10, **caractérisé en ce que** :
- lors de l'incorporation de l'étiquette sur le support, déjà numérisé ou en cours de numérisation, on associe dans une mémoire de données d'un serveur de gestion des données d'identifications de l'étiquette, transmises par un lecteur (66) d'étiquette, à un document électronique issue de la numérisation du support.

12. Appareil de formation d'image **caractérisé en ce qu'**il comporte:
- un dispositif (54) d'incorporation d'une étiquette dotée d'une carte sans contact dans un support,
- des moyens (30) pour exécuter le procédé de formation d'image selon l'une des revendications 10 et 11.

13. Appareil de formation d'image, selon la revendication 12 **caractérisé en ce que**, l'appareil est une photocopieuse, une imprimante un scanner à défilement ou une combinaison des trois.

14. Appareil de formation d'image, selon la revendication 13 **caractérisé en ce que**, l'appareil est un scanner (64) couplé avec un lecteur (66) d'étiquettes, ledit lecteur et ledit appareil étant connecté à un serveur (65) de gestion de documents électroniques.
